Europäisches Patentamt

European Patent Office

Office européen des brevets

(11) Publication number: **0 510 590 B1**

## EUROPEAN PATENT SPECIFICATION

(45) Date of publication of patent specification: **06.09.95**

(51) Int. Cl.⁶: **B60K 41/14**

(21) Application number: **92106821.9**

(22) Date of filing: **21.04.92**

(54) **Control device for an internal combustion engine and a continuously variable transmission.**

(30) Priority: **19.04.91 JP 88603/91**
**07.04.92 JP 85740/92**

(43) Date of publication of application:
**28.10.92 Bulletin 92/44**

(45) Publication of the grant of the patent:
**06.09.95 Bulletin 95/36**

(84) Designated Contracting States:
**DE FR GB NL**

(56) References cited:
**EP-A- 0 126 880**
**US-A- 4 458 560**
**US-A- 4 584 907**
**US-A- 4 589 302**
**US-A- 4 893 526**

(73) Proprietor: **MITSUBISHI JIDOSHA KOGYO KABUSHIKI KAISHA**
**33-8, Shiba 5-chome**
**Minato-ku**
**Tokyo 108 (JP)**

(72) Inventor: **Togai, Kazuhide**
**28-9 Uradoh 2-chome,**
**Takatsuki-shi**
**Osaka 569 (JP)**

Inventor: **Takatsuka, Takashi, Fuei Rakusai Nishisakaidani**
**Danchi,12-305,6,Nishisakaidani-cho 3 chome,Oharano**
**Nishikyou-ku, Kyoto-shi,**
**Kyoto 610-11 (JP)**
Inventor: **Shimada, Makoto, Mitsubishi Kobari Shataku A-303**
**4-2 Aza Kamegafuchi, Kobari-cho,**
**Okazaki-shi,**
**Aichi 444 (JP)**
Inventor: **Kawai, Junji**
**1-1, Imaike-cho 2 chome, Anjo-shi**
**Aichi 446 (JP)**
Inventor: **Hayafune, Kazuya, Tatsumigaoka Shataku J-304**
**5, Tatsuminaka 1-chome, Okazaki-shi**
**Aichi 444 (JP)**

(74) Representative: **Kern, Ralf M., Dipl.-Ing.**
**Postfach 14 03 29**
**D-80453 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

BACKGROUND OF THE INVENTION

This invention relates to a control device for use in an internal combustion engine and a continuously variable transmission, wherein the control device is connected to the continuously variable transmission arranged in a power transmission system between driving wheels and the internal combusion engine loaded on a vehicle. More particularly, this invention relates to a control device of this type in which an output of an internal combusion engine can be adjusted by controlling an intake air flow adjusting unit and in which a transmission ratio of the continuously variable transmission can be changed at a variable speed suitable for driving conditions of a vehicle.

Generally, engine output of an internal combusion engine (hereinafter referred as an "engine") mounted on a vehicle is mechanically controlled by a throttle device. The throttle device is coupled to an accelerator pedal and a throttle lever (both of which are referred as accelerator hereinafter) through an accelerator cable.

When the accelerator and the throttle device directly cooperate with each other, excessive output may be generated due to careless driving and lack of skill of a driver. The excessive output will cause many troubles: a car may slide when a driver steps the accelerator; slip on the icy ground; skid at a sudden acceleration.

With respect to the above-mentioned problems, many method have been proposed for the control device, such as a dual throttle valve method and a traction control (power control) method utilizing so called drive-by-wire method. In the dual throttle valve method, a main throttle valve and a sub throttle valve are arranged in the throttle device and the sub throttle valve is electronically controlled. The drive-by-wire method is one such that the accelerator cable is not disposed between the accelerator and the throttle valve. An accelerator opening (throttle opening) is detected by using a sensor such as a potentiometer, while the throttle valve is operated by a stepping motor or the like.

With the traction control method, the internal combustion engine and the continuously variable transmission are generally controlled by using an engine control unit (ECU). The ECU calculates an optimum opening for the main throttle valve and the sub throttle valve in accordance with the data representative of the rotation speed of the front and rear driving wheels as well as a step amount for the accelerator pedal. In this way, a drive shaft torque of the wheels is controlled so as not to cause the undesirable skid or the like.

Information regarding to the required output of the engine is properly determined in accordance with the data representative of, for example, the accelerator opening. As mentioned above, the ECU calculates the required output of the engine when the traction control is performed to control the internal combusion engine and the continuously variable transmission. The sub-throttle valve and the main throttle valve are controlled so as to obtain the calculated required output. It is preferable that the calculation is carried out with respect to an actual torque under current engine conditions.

More specifically, an over-control and poor performance of the control device can be prevented by calculating a deviation between a required torque and the real torque and by carrying out a real time control to eliminate the deviation.

The actual torque of the engine can be detected under a bench test using a chassis dynamometer. However, it is difficult to mount such a chassis dynamometer on a vehicle due to its weight, size, and costs. In addition, output (energy) loss is inevitable when using the chassis dynamometer for detecting the real torque of the engine.

On the contrary, an output torque of an engine is transmitted to a drive shaft via a transmission in the power transmission system for the engine. For example, a continuously variable transmission (CVT) is applied to a vehicle. The CVT can adjust a transmission ratio in response to a signal indicative of hydraulic pressure which is applied to a hydraulic actuator.

In the continuously variable transmission of the type desribed, a transmission ratio changing speed is calculated so as to eliminate a transmission ratio deviation between a target transmission ratio, calculated in accordance with a driving condition, and an actual transmission ratio.

Accordingly, the hydraulic actuator of the CVT can be controlled in order to obtain transmission ratio changing.

The above-mentioned conventional continuously variable transmission for a vehicle controls the hydraulic actuator so as to correct the actual transmission ratio into the desired transmission ratio. However, a high/low level of the torque transmitted is not considered.

Accordingly, when the transmission ratio of the CVT increases or decreases at a relatively low speed, the torque on the drive shaft is smoothly changed. Further, when the transmission ratio deviation between the target transmission ratio changing speed and the actual transmission ratio changing speed is relatively large, the transmission ratio changing speed rapidly increases or decreases. However, the CVT consumes an operation torque and has a relatively large moment of inertia due to pulleys. This negatively affects the transmission ratio changing speed with undesired excessive shock on transmission. In addition, excessive torque of the engine may result in sliding of a steel belt. Such a "shock" on transmission is reduced merely by restricting the transmission ratio changing speed, which in low transmission performance of the continuous variable which would lead to poor performance of the continuously variable transmission.

From the document EP-A-0 126 880 there is already known a control device for an internal combustion engine with the features of the preamble of claim 1.

EP-A-0 126 880 relates to a control system, in which the opening degree of the throttle valve and the transmission ratio of the stepless transmission are controlled on the basis of the amount of the depression of the accelerator pedal.

In detail, a target engine speed is set on the basis of the depression amount of the accelerator pedal. A target transmission ratio is determined on the basis of a deviation between the target engine speed and an actual engine speed, thereby controlling the stepless transmission to attain the target transmission ratio. Further, a target opening degree of the throttle valve is determined on the basis on the depression amount of the accelerator pedal. Thus, the engine can be controlled to operate in a state in which the engine can produce an output with an optimum fuel consumption.

When the engine is subjected to a particular state in which it suffers from knocking, the opening degree of throttle valve and the transmission ratio of the stepless transmission are controlled so as to change the engine speed without changing the engine output.

The known technique is intended to suppress shocks caused by a torque variation when it is necessary to change the engine speed without changing the engine output during the particular operating state of the engine.

It has been well-known to alternately control the engine output and the transmission ratio of the stepless transmission as in the reference EP-A-0176 880.

However, in the conventional art, no determination is made as to whether or not it is possible to produce an engine output necessary for eliminating a deviation between a target engine acceleration and an actual engine acceleration. Further, the engine output is changed without fail regardless of whether it is possible to produce the necessary output.

Therefore, when it is impossible to produce the engine output necessary to eliminate the foregoing deviation, the engine output is not changed to be compatible with a current condition, which undesirably prevents the engine from quickly responding to the particular state.

## SUMMARY OF THE INVENTION

The present invention is aimed at solving the foregoing problems of the related art. These problems are solved by a control device according to claim 1.

Specifically, an engine torque correction amount is set on the basis of a deviation between the target acceleration and the actual acceleration. When it is possible to change the engine output according to the engine output torque correction amount, the engine output is accordingly controlled. On the other hand, when the foregoing correction is impossible, the engine torque correction amount is restricted in a possible range, thereby correcting the engine output torque accordingly.

The target transmission ratio changing speed, which is set on the basis of the deviation between the target transmission ratio and the actual transmission ratio, is corrected on the basis of a deficient torque when the deficient torque is lacked by restricting the engine torque correction amount, which enables the control device to be quickly responsive to any operating conditions.

Preferred embodiments of the invention are represented by the subclaims. Some especially preferred embodiments of the invention are now described in relation to the drawing.

## BRIEF DESCRIPTION OF THE DRAWING

Fig. 1 is a structural schematic diagram of a control device for an internal combusion engine according to an embodiment of this invention;
Fig. 2 is a sectional view of a continuously variable transmission applied to the device as illustrated in Fig. 1;
Fig. 3 is a functional block diagram for use in describing operation and function of electronic control unit in the device illustrated in Fig. 1;
Fig. 4 is a functional block diagram for use in describing operation and function of a restricting arrangement illustrated in Fig. 3;
Fig. 5 is a flow chart of a main routine carried out by the device as illustrated in Fig. 1;
Fig. 6 is a flow chart of a sub-routine for an engine output control carried out by the device as illustrated in Fig. 1;
Fig. 7 is a flow chart of a sub routine for a CVT control carried out by the device as illustrated in Fig. 1;
Fig. 8 shows a transmission ratio changing speed calculating map for use in output control carried out by the device as illustrated in Fig. 1;

Fig. 9 shows an intake air flow/torque calculating map for use in output control carried out by the device as illustrated in Fig. 1;

Fig. 10 shows a throttle valve (accelerator) opening/intake air flow calculating map for use in output control carried out by the device as illustrated in Fig. 1;

Fig. 11 shows a torque calculating map for use in output control carried out by the device as illustrated in Fig. 1;

Fig.12 shows a transmission ratio changing speed calculating map for use in output control carried out by the device as illustrated in Fig. 1;

Fig. 13 shows a dowel angle calculating map for use in output control carried out by the device as illustrated in Fig. 1;

Fig. 14 is a schematic view of a dynamic model which represents dynamical function of the CVT in the device as illustrated in Fig. 1;

Fig. 15 is a schematic diagram showing a part of a pulley in the device as illustrated in Fig. 2; and

Fig. 16 shows a gear speed calculating map for the CVT.

## DESCRIPTION OF THE PREFERRED EMBODIMENT

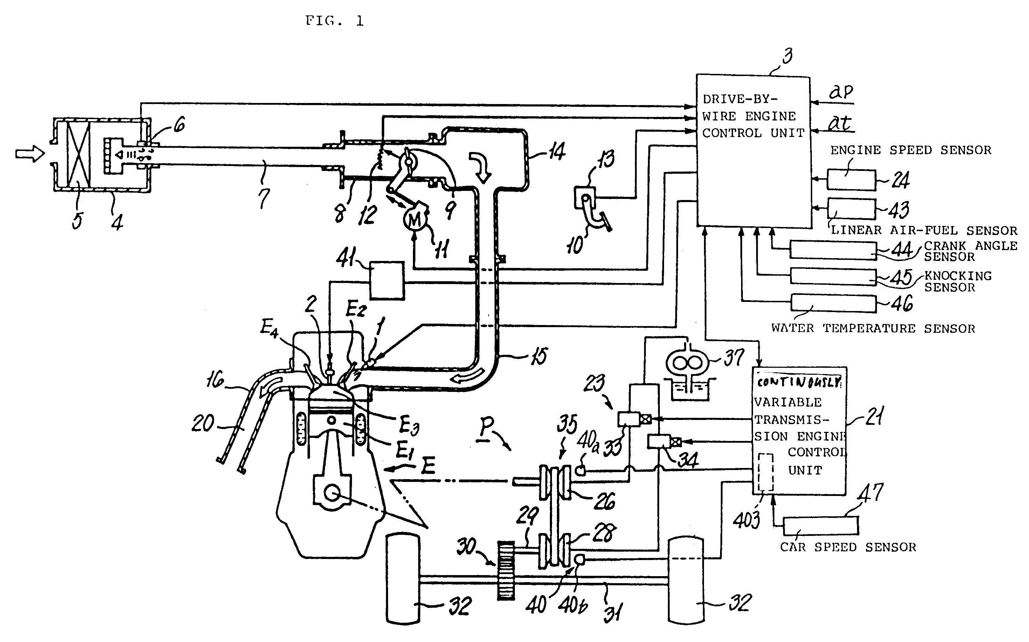

Fig. 1 shows a schematic view of a gasoline engine system (hereinafter referred simply as an engine system) and a power transmission system P, utilizing a control device according to the present invention for an internal combustion engine and a continuously variable transmission.

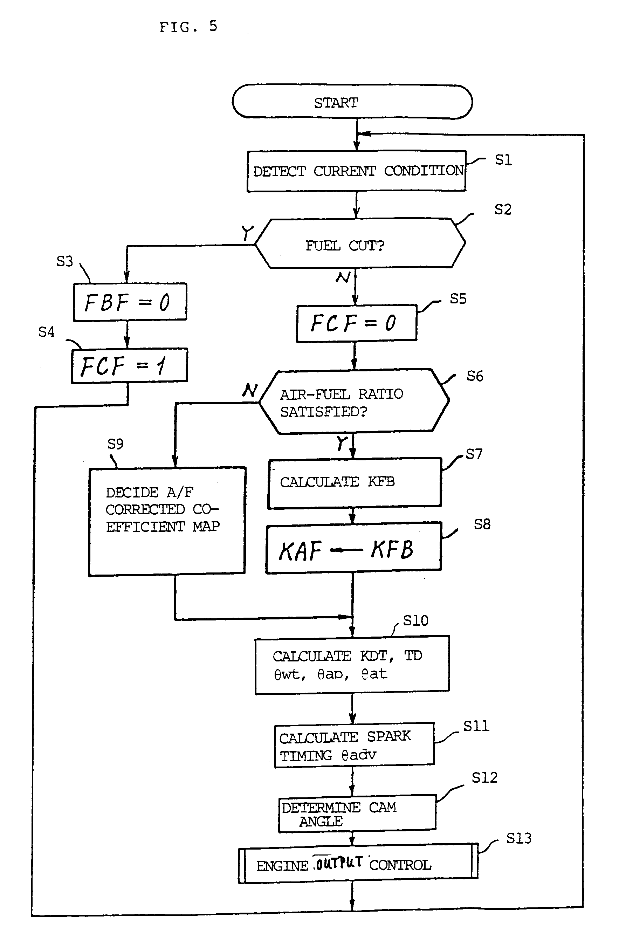

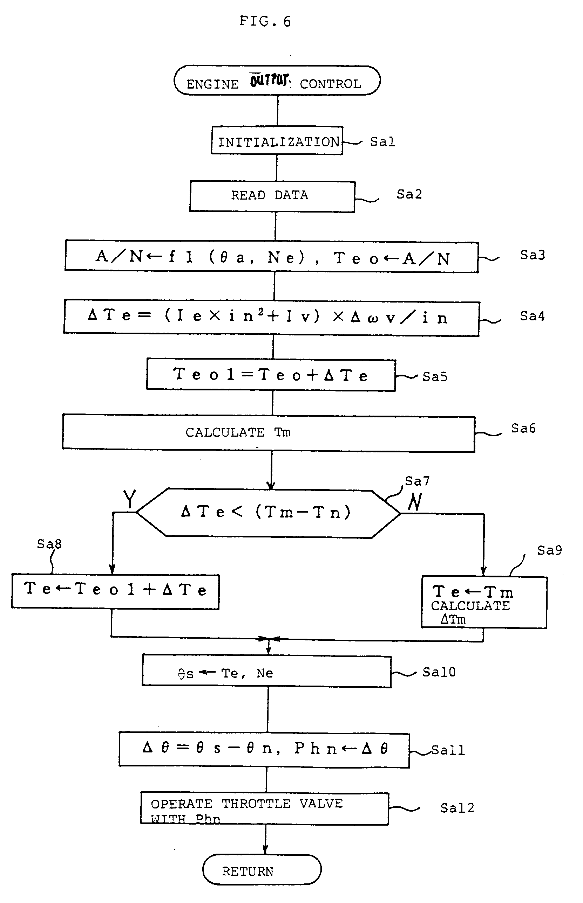

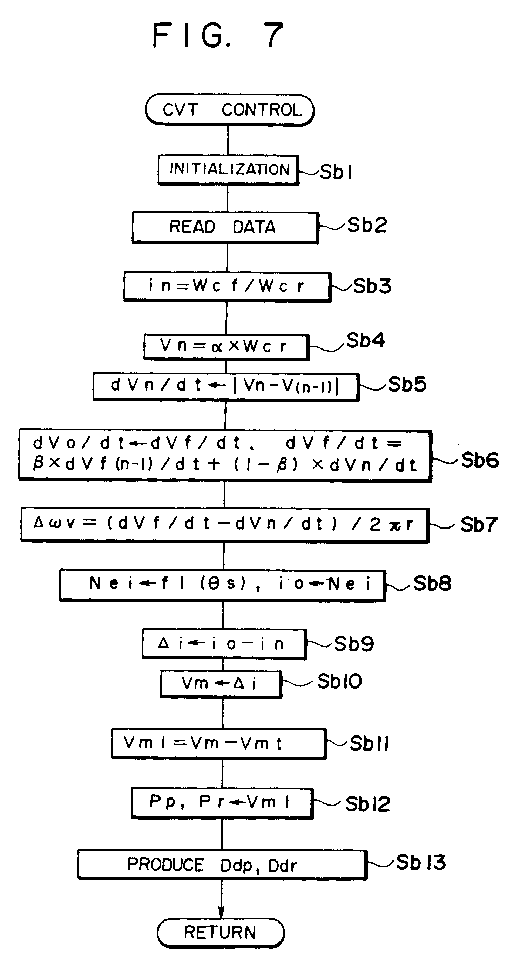

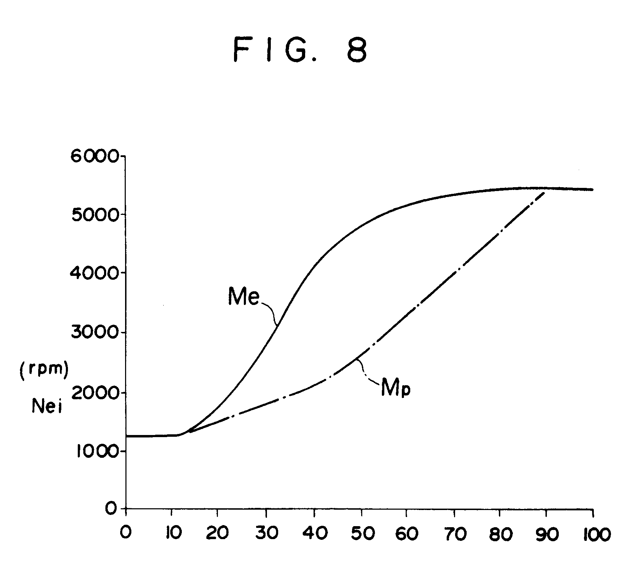

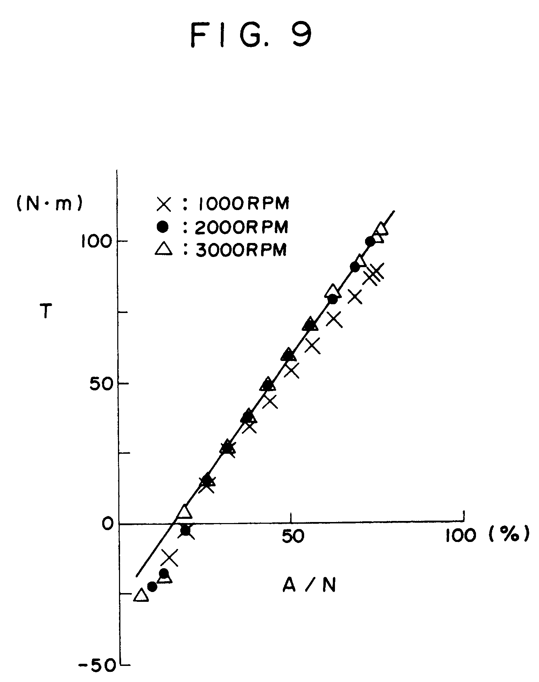

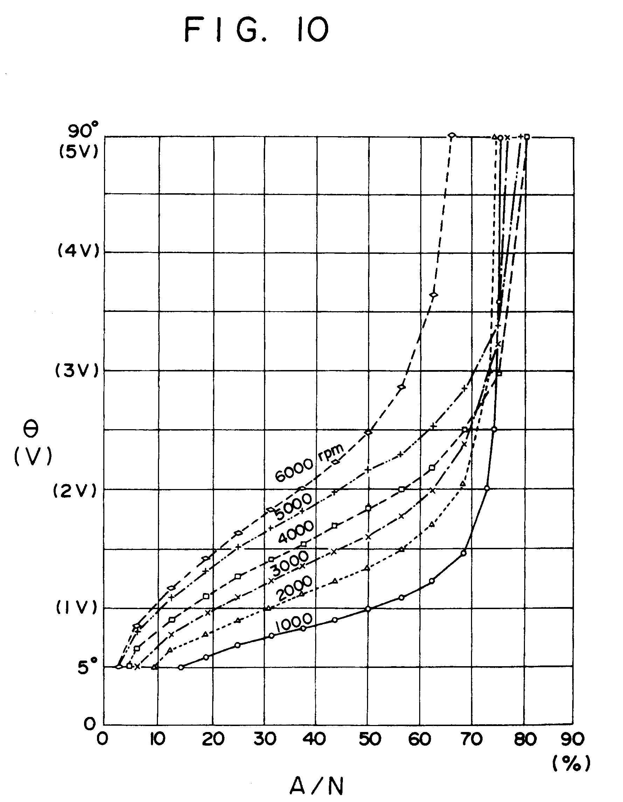

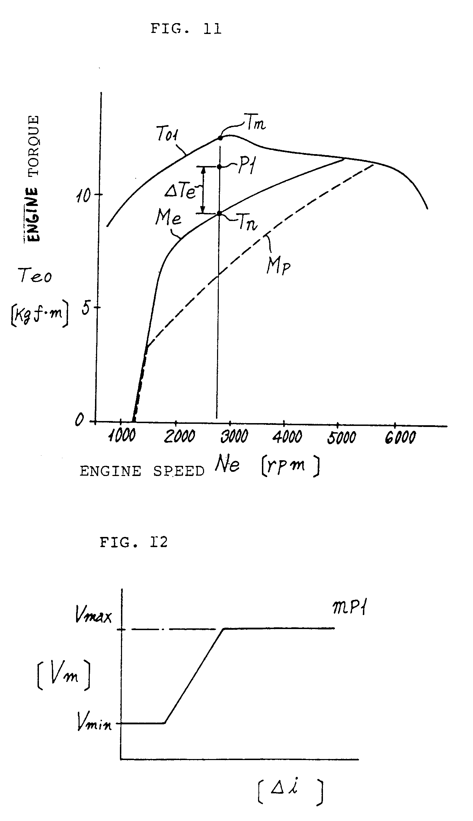

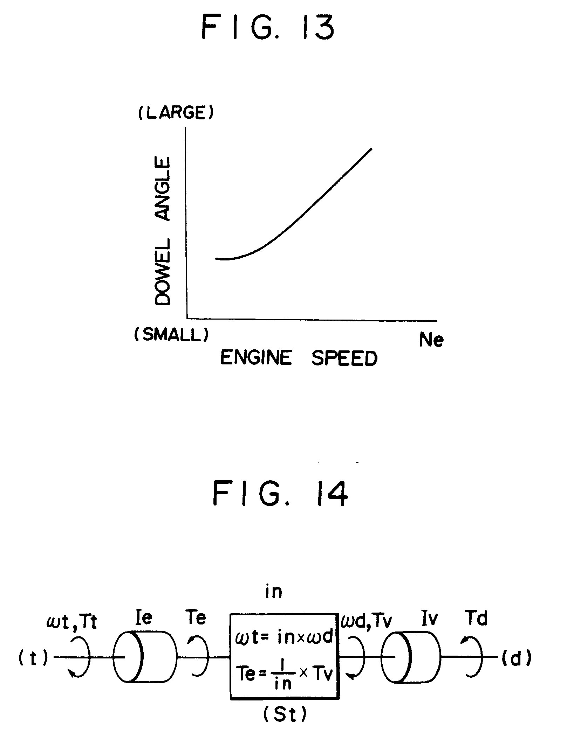

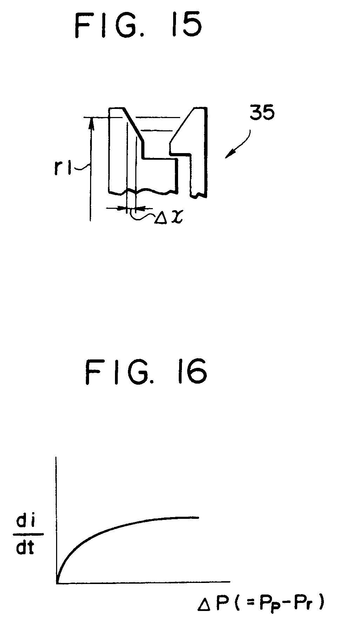

Referring to Fig. 1, the engine system comprises an electronically controlled injection (ECI) four-cycle engine E as the internal combustion engine. In this system, devices such as injectors 1 and spark plugs 2 are controlled by a drive-by-wire engine control unit (DBWECU) 3. As is known in the art, the injector 1 is a device by which liquid fuel is converted to vapour and sprayed into cylinders of the internal combustion engine and the spark plug 2 is a device for igniting air-fuel mixture in the internal combustion engine by means of an electric spark (not shown). The DBWECU 3 is connected to a continuously variable transmission engine control unit (CVTECU) 21. The DBWECU 3 communicates, through a communication line, with the CVTECU 21 which electronically controls a continuously variable transmission (CVT) 35 in the power transmission system P. As will later be described more detail, each of the DBWECU 3 and the CVTECU 21, both of which serve as an electronic control unit for the engine system, comprises a microcomputer (not shown). The microcomputer comprises a memory circuit (not shown) for storing a main routine for the DBWECU 3 (Fig. 5), an engine output control processing routine (Fig. 6), a CVT control processing routine (Fig. 7), a transmission ratio changing speed calculating map (illustrated in Fig. 8), an intake air flow/torque calculating map (Fig. 9), a throttle opening/intake air flow calculating map (Fig. 10), a torque/engine speed calculating map (Fig. 11), a transmission ratio changing speed/transmission ratio deviation calculating map (Fig. 12), a dowel angle calculating map (Fig. 13), and a transmission ratio changing speed/controlled hydraulic pressure calculating map (Fig. 16). The memory circuit (RAM) comprises predetermined areas for data storage.

The DBWECU 3 is connected to an actuator 11 for actuating a throttle valve 9 which serves as an intake air flow adjusting unit for adjusting a flow of an intake air supplied to the engine system. In other words, the operation of the throttle valve 9 is not directly affected by that of an accelerator 10, namely, driver-operable member. The throttle valve 9 may be a butterfly valve. The accelerator 10 is coupled to an accelerator opening sensor 13 which serves as an operational amount detecting unit. The accelerator opening sensor 13 may be, for example, a potentiometer for detecting an accelerator opening $\theta a$ to produce an electric signal indicative of the detected accelerator opening $\theta a$ and supplied to the DBWECU 3 as an acceleration requirement signal. The DBWECU 3 then modifies the acceleration requirement signal into a valve control signal which is supplied to the actuator 11. The actuator 11 actuates the throttle valve 9 in response to the valve control signal.

The DBWECU 3 is also connected to an engine speed sensor 24, a linear air-fuel sensor 43, a crank angle sensor 44, a nocking sensor 45, and a water temperature sensor 46. The operation and function of these sensors are clarified as the description proceeds.

Description will be made as regards an entire construction of the engine system mainly along a direction to which the air flows in the engine system.

An air cleaner body 4 comprises an air cleaner element 5 and an air flow sensor 6. The air flow sensor detects an intake air flow supplied to the air cleaner body 4 through the air cleaner element 5. In this embodiment, the Karman vortex air flow sensor is used for the air flow sensor 6. However, it is obvious that other like devices are applicable to the air flow sensor 6. The air cleaner body 4 comprises other sensing devices such as an atmospheric pressure sensor and an atmospheric temperature sensor. As is known in the art, physical amounts of the intake air are measured by using these sensors, including the air flow sensor 6, which produce sensed data representative of these physical amounts. The sensed data is supplied to the DBWECU 3. The intake air is delivered through an inlet pipe 7 to a throttle body 8.

The intake air in the throttle body 8 then flows into a surge tank 14 through the throttle valve 9 for controlling the air flow supplied to the surge tank. As mentioned above, the throttle valve 9 is opened and closed without being directly affected by the operation of the accelerator 10 stepped by a driver. In this embodiment, a stepping motor is used for the actuator 11 but it is obvious that any one of like devices is applicable as the actuator 11. The actuator 11 is controlled by the DBWECU 3 which adopts the conventional drive-by-wire (DBW) system. When the throttle valve 9 is actuated by the actuator 11, a throttle position sensor (hereinafter refered as a throttle sensor) 12 detects a current position of the throttle valve 9. The throttle sensor 12 supplies to the DBWECU 3, an intake air flow signal, indicative of the air flow passing throuth the throttle valve 9.

The intake air flowing into the throttle body 8 is delivered through the surge tank 14 to an intake manifold 15. At the downstream of the intake manifold 15, the injector 1 injects the fuel into the air in response to an ignition control signal supplied from the DBWECU 3. The resulting air-fuel mixture is poured into a combusion chamber $E_3$ by opening a suction valve $E_2$ disposed in the engien E. The air-fuel mixture is then ignited by the spark plugs 2 at or around a top dead center (TDC). After completion of the explosion/expansion stroke, exhaust gas is supplied into an exhaust manifold 16, by opening an exhaust valve $E_4$. Exhaust gas is guided via an exhaust path 20 formed in the exhaust manifold 16 to an exhaust gas purifying system (not shown). The exhaust gas purifying system removes hazardous components such as the carbon monoxide (CO) and hydrocarbons (HC) from the exhaust gas. The purified gas is then discharged through a muffler (not shown) to the outside of the engine system.

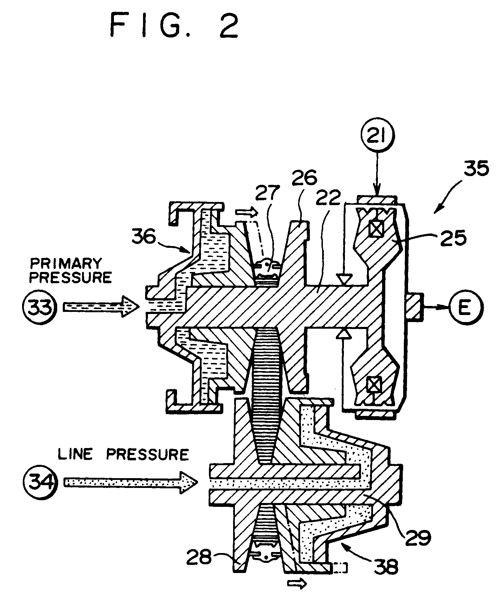

Referring now to Fig. 2 in addition to Fig. 1, description will proceed as regards the power transmission system P connected to the engine E. A hydraulic actuator 23 is coupled to the CVTECU 21 in order to hydraulically control the continuously variable trasnmission 35. A crankshaft (not shown) of the engine E is operatively coupled to an electromagnetic clutch 25 of the continuously variable transmission 35 illustrated in Fig. 2. An output of the electromagnetic clutch is coupled to a primary shaft 22. The primary shaft 22 is integral with a primary pulley 26. Similarly, a secondary pulley 28 is integral with a secondary shaft 29. Each of the first and the second pulleys consists of a pair of discs having inclined inner surfaces. The primary pulley 26 and the secondary pulley 28 are linked together by a steel belt 27. The secondary shaft 29 is constrcuted such that the turning force of the secondary pulley is transmitted to drive wheels 32, 32 which are coupled to a drive shaft 31 via a reduction gear train 30 and a differential gear (not shown).

One of the primary pulley discs serves as a part of a piston unit of a hydraulic actuator 36. The hydraulic actuator 36 is coupled to a first solenoide valve 33 and in turn to a hydraulic source 37. The hydraulic source 37 is used for applying primary pressure to the hydraulic actuator 36. Similarly, one of the secondary pulley discs serves as a part of a piston unit of a hydraulic actuator 38. The hydraulic actuator 38 is coupled to a second solenoide valve 34 and in turn to the hydraulic source 37. The hydraulic source 37 applies line pressure to the hydraulic actuator 38. The first and the second solenoide valves 33 and 34 are controlled in response to an output signal (duty signal) supplied from the CVTECU 21.

Therefore, the effective diameter of each pulley can be relatively changed according to the opening/closing ratio (duty ratio) of the first and the second solenoide valves 33 and 34, respectively. More specifically, the primary pulley 26 is opened and the secondary pulley 28 is closed when the rotation speed of the engine is relatively low. In other words, the primary pulley 26 has a small effective diameter while the secondary pulley 28 has a large one. When the engine rotates at a relatively high speed, a relatively lower line pressure is applied to the secondary pulley 28. In this state, the secondary pulley 28 is opened and the effective diameter thereof becomes relatively small. In this manner, the transmission ratio of the continuously variable transmission can be changed by changing engagement of the steel belt with the pulleys.

It is noted that a sensor unit 40 is disposed for detecting rotation speeds of the pulleys. The sensor unit 40 comprises a pair of sensors 40a and 40b which detect rotation speeds wcf and wcr of the primary pulley 26 and the secondary pulley 28, respectively. The sensors 40a and 40b are connected to a divider 48 disposed in the CVTECU 21. The divider is used for obtaining an actual transmission ratio in. In addition, the CVTECU 21 is connected to a car speed sensor 47. Supplied with the rotation speed wcr of the secondary pulley 28, the car speed sensor 47 multiples wcr by a constant $\alpha$ to produce a car speed signal Vn, where $\alpha$ is equivalent to a predetermined transmission ratio.

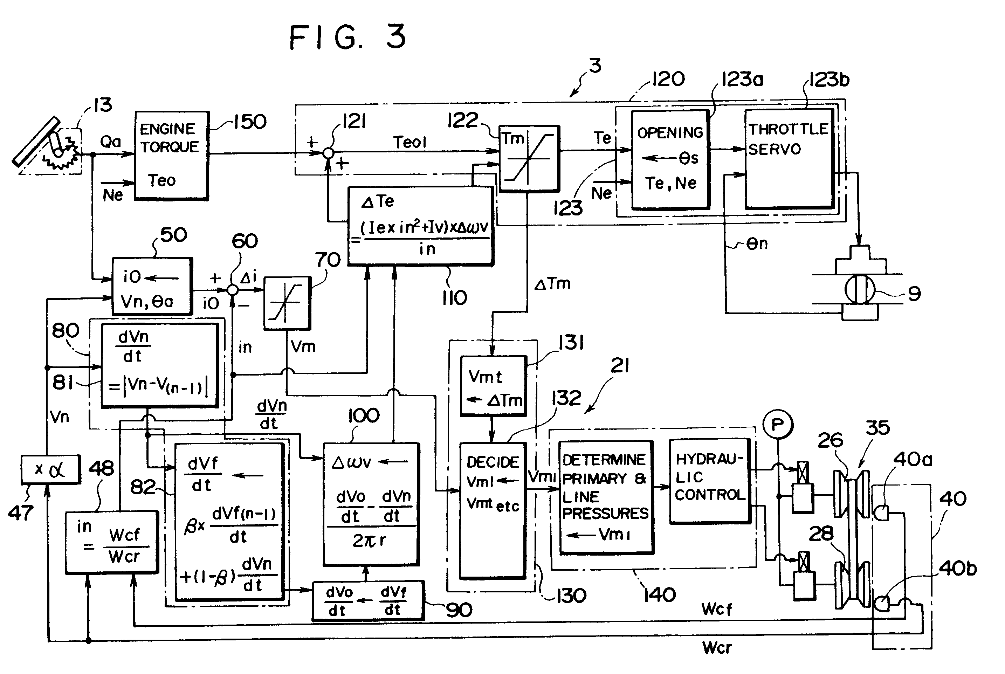

Fig. 3 shows a functional block diagram of a drive-by-wire engine control unit (DBWECU) 3 and a continuously variable transmission (CVTECU) 21. It is noted that the description regarding operation of the DBWECU 3 and the CVTECU 21 will later be made more in detail in conjunction with flow charts illustrated in Figs. 5 through 7. However, to facilitate the understanding of the operation of these engine control units, description will be made with reference to Fig. 3.

As shown in Fig. 3, the control device according to an embodiment of this invention comprises a throttle valve 9 which acts as an intake air flow adjusting unit, an accelerator opening sensor 13 which acts as an operational amount detecting unit, a car speed sensor 47, a transmission ratio sensor 48 which serves as a transmission ratio detecting unit, a target transmission ratio determining unit 50, a transmission deviation calculating unit 60, a transmission ratio changing speed determining unit 70, a driving condition detecting unit 80, a target driving condition amount determining unit 90, a driving condition amount deviation calculating unit 100, an engine torque (corrected) correction amount determining unit 110, an engine torque controlling unit 120, a transmission ratio changing speed correcting unit 130, and a transmission controlling unit 140.

As described above, the sensors 40a and 40b detect rotation speed wcf and wcr of the pulleys 26 and 28, respectively. It is noted here that each of the detected values is actually produced as a signal representing thereof. However, the word "signal" is omitted hereinafter for the purpose of brevity of description. Thus, an expression, for example, that the rotation speed wcf is produced means the signal indicative of the rotation speed wcf is produced. Any other detected values or calculated values are also described like this.

The roation speeds wcf and wcr are supplied to the transmission ratio detecting arrangement 48 to produce an actual transmission ratio in of the continuous variable transmission 35. The actual transmission ratio in is then supplied to the transmission ratio deviation calculating arrangement 60. The rotation speed wcr is also supplied to a car speed sensor 47 where a constant $\alpha$ is multiplied to the rotation speed wcr to produce a car speed Vn. The car speed Vn is delivered to the target transmission ratio determining unit 50.

The operational amount detecting unit (accelerator opening sensor) 13 detects an operational amount $\theta a$ of the accelerator pedal 10 to supply it to the target transmission ratio determining unit 50. Supplied with the operational amount $\theta a$ and the car speed Vn, the target transmission ratio determining unit 50 determines a desired transmission ratio io for the continuous variable transmission 35. The desired target transmission ratio io is supplied to the transmission ratio deviation calculating unit 60. The transmission ratio deviation calculating unit 60 calculates a transmission ratio deviation $\Delta i$ by subtracting the actual transmission ratio in from the target transmission ratio io, namely:

$$\Delta i = io - in. \qquad (1)$$

The transmission ratio deviation $\Delta i$ is supplied to the transmission ratio changing speed determining unit 70. The transmission ratio changing speed determining unit 70 determines a transmission ratio changing speed Vm according to the transmission ratio deviation $\Delta i$ by using a map as illustrated in Fig. 12. It is noted that the transmission ratio changing speed Vm is directly proportional to the transmission ratio i.

The driving condition detecting unit 80 comprises a car acceleration calculating unit 81 and a smoothed acceleration calculating unit 82. As will later be described more detail, the car acceleration calculating unit 81 calculates a car acceleration dVn/dt in response to the car speed Vn. The calculated car acceleration dVn/dt is then supplied to the smoothed acceleration calculating unit 82 to produce a smoothed acceleration dVf/dt. The smoothed acceleration calculating unit 82 is connected to the target acceleration determining unit 90. Supplied with the smoothed acceleration dVf/dt, the target acceleration determining unit 90 determines a target car acceleration dVo/dt. The target car acceleration deviation dVo/dt is delivered to the acceleration deviation calculating unit 100 where an accleration deviation $\Delta wv$ is determined in response to the target car acceleration dVo/dt and the smoothed acceleration dVn/dt in a manner described hereinafter.

Supplied with the acceleration deviation $\Delta wv$ and the real transmission ratio in, the engine output torque correction amount determining unit 110 determines an engine torque correction amount $\Delta Te$. The engine output torque corrected amount $\Delta Te$, which is required for eliminate the acceleration deviation $\Delta wv$, is then delivered to the engine output torque controlling arrangement 120. The engine torque controlling arrangement 120 comprises a target engine torque determining unit 121, a restricting arrangement 122, and an intake air flow controlling arrangement 123. The intake air flow controlling arrangement 123 comprises an accelerator opening calculating unit 123a and a throttle servo 123b.

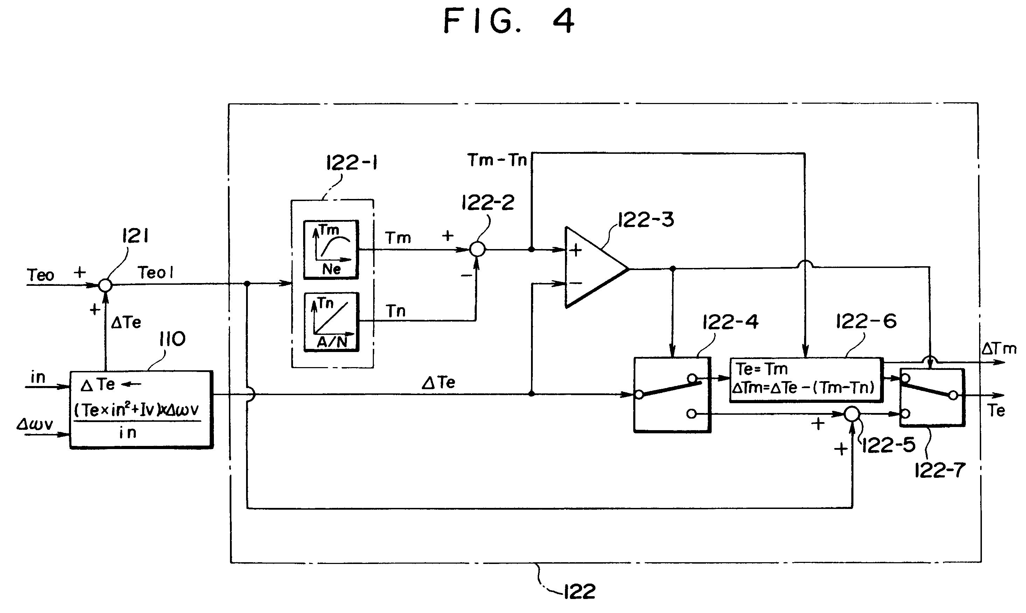

The target engine output torque determining unit 121 determines a target engine output torque Teo1 in response to a required torque Teo and to the engine output torque corrected amount $\Delta Te$. The required torque Teo is calculated in a manner described below at a required torque determining unit 150. The restricting arrangement 122 restricts the target engine output torque Teol within a predetermined range of an allowable engine output torque by using a torque calculating map as illustrated in Fig. 11. The restricted target engine output torque Teol is used for producing both the target engine torque Te and a deficient torque $\Delta$Tm, which is deficient because the target engine output torque is restricted in the allowable engine output torque range. The restricted target engine torque Te is delivered to the intake air flow controlling unit 123 and the deficient torque $\Delta$Tm is delivered to the transmission ratio changing speed arrangement 130. Detailed description regarding to the operation carried out at the restricting arrangement 122 will be made below with reference to Fig. 4. The intake air flow controlling arrangement 123 controls the intake air flow adjusting unit (the throttle valve) 9 in response to the restricted target engine torque Te and the engine speed Ne in a mannner described below.

The transmission ratio changing speed correcting unit 130 corrects the transmission ratio changing speed Vm in accordance with a deficient torque $\Delta$Tm and produces a corrected transmission ratio changing speed Vm1. More specifically, the transmission ratio changing speed correcting unit 130 comprises a transmission ratio changing speed deficiency calculating unit 131 and a transmission ratio changing speed deciding unit 132. The transmission ratio changing speed deficiency Vmt corresponding to the deficient torque Tm and the actual transmission ratio in. The transmission ratio changing speed deciding unit 132 decides a corrected transmission ratio changing speed Vm1.

The transmission ratio changing speed Vm1 is supplied to the transmission controlling unit 140 to control the transmission ratio changing speed at the calculated transmission ratio changing speed Vm1.

Referring to Fig. 4, description will proceed for further understanding as regards the operation and function of the restricting arrangement 122. The restricting arrangement 122 comprises an available torque which is a maximum torque generated at each engine speed calculating unit 122-1, a subtracting unit 122-2, a comparison unit 122-3, a first switching unit 122-4, an adding unit 122-5, a desired engine torque substituting unit 122-6 and a second switching unit 122-7. The available torque/actual engine torque calculating unit 122-1 calculates an available torque Tm for the current engine speed Ne by using the torque calculating map as illustrated in Fig. 11. In addition, the available torque/actual engine torque calculating unit 122-1 also calculates an actual engine torque Tn corresponding to the detected engine speed Ne and the intake air flow A/N by using the intake air flow/torque calculating map as illustrated in Fig. 9.

The calculated Tm and Tn are supplied to the subtracting unit 122-2 for subtracting the actual engine torque Tn from the available torque Tm to produce a subtracted result (Tm - Tn). This result is then supplied to the comparison unit 122-3. Another input for the comparison unit 122-3 is connected to the engine torque correction amount determining unit 110. The comparison unit 122-3 compares the engine torque corrected amount $\Delta$Te with the subtracted result (Tm - Tn). The engine torque correction amount $\Delta$Te is also supplied to the first switching unit 122-4.

The first switching unit 122-4 is used for selectively delivering the engine torque correction amount $\Delta$Te either to the adding unit 122-5 or to the target engine torque substituting unit 122-6. More specifically, a corrected target engine torque Te is determined by adding the engine output torque correction value $\Delta$Te to the target engine torque Teo1 when the engine torque correction amount $\Delta$Te is smaller than the subtracted result (Tm - Tn). On the contrary, when the engine torque correction amount Te is larger than the subtracted result (Tm - Tn) the engine torque correction amount $\Delta$Te is supplied to the target engine torque substituting unit 122-6 through the first switching unit 122-4, where a value of a maximum torque Temax, that is, the available torque Tm corresponding to the current engine speed Ne is used as the target engine torque Te. The second switching unit 122-7 is used for producing the target engine torque Te selectively supplied from one of the adding unit 122-5 and the target engine torque substituting unit 122-6 in response to the comparison result obtained at the comparison unit 122-3. In addition, the deficient torque $\Delta$Tm is calculated by subtracting (Tm - Tn) from the engine torque correction amount $\Delta$Te.

Referring to Figs. 5 through 7, description will be made as regards operation of the control device according to the present invention. It is noted that the DBWECU 3 and the CVTECU 21 carry out their operations when the engine system E is driven by operating an ignition key (not shown).

First, the DBWECU 3 carries out a main routine as illustrated in Fig. 5. At the beginning of the main routine, the DBWECU 3 carries out initialization operation. At step S1, current conditions of the engine E and a power transmission system P are detected by using the sensed data indicative of, for example, the throttle valve opening $\theta$a and the intake air flow A/N, supplied from each sensor connected thereto. The detected data are then stored in a predetermined memory area in the memory circuit. At step S2, the DBWECU 3 determines whether or not fuel cut is carried out in the engine. This determination is made in accordance with an engine speed Ne and an engine load (using the intake air flow A/N in this embodiment). As well known in the art, the fuel cut is carried out when the accelerator pedal is not stepped, that is, when the accelerator opening $\theta$a is zero while the engine speed is not zero. When the step S2 is positive, it is followed by step S3. At step S3, a feedback flag FBF is reset. Subsequently, a fuel cut flag FCF is set at step S4. The feedback flag FBF and the fuel cut flag FCF are disposed in the memory circuit (not shown) in the DBWECU 3. After carrying out the step S4, then the process returns back to the step S1.

When the step S2 is negative. this step proceeds to step S5 where the fuel cut flag FCF is reset. At step S6, the DBWECU 3 determines whether or not a well-known air-fuel ratio feedback condition is satisfied. When the step S6 is negative due to, for example, a power driving state of the engine, an air-fuel (A/F) correction coefficient KMAP is calculated, at step S9, in accordance with some data (A/N,Ne) indicative of the current driving condition of a vehicle. The calculated KMAP is stored in the memory location addressed by an address KAF. The step S9 proceeds to step S10.

On the contrary, when the step S6 is positive, step S7 is carried out. At step S7, a corrected value KFB is calculated with respect to data supplied from the air-fuel sensor 43. The corrected value KFB, which is calculated by using a stoichiometric ratio, is indispensable to make an actual air-fuel ratio close to the stoichiometric ratio. As well-known in the art, the stoichiometric ratio is used as a constant for a feedback control in general. The corrected value KFB is stored in an memory location addressed by an address KAF and then step S10 is proceeded.

At the step S10, fuel injection pulse correction coefficient KDT and a dead time correction value TD are set according to the current driving condition in a manner well known in the art. In addition, a water temperature correction value $\theta$wt, an atmospheric pressure corrected value $\theta$ap, and an intake air temperature correction value $\theta$at are calculated by using signals supplied from corresponding sensors.

At step S11, an ignition timing $\theta$adv is calculated according to a following equation:

$$\theta adv = \theta b + \theta wt + \theta ap + \theta at - \theta ret \qquad (2)$$

where $\theta$b represents an ignition angle calculated by using a well known map with respect to a load and the engine speed Ne. $\theta$ret is used for retarding the ignition timing when the occurance of a knocking is detected by the knocking sensor 45.

When there is a decrease in the water temperature, the atmospheric pressure or the intake air pressure, the ignition timing will be advanced on the basis of the water temperature correction value $\theta$wt, the atmospheric pressure correction value $\theta$ap, or the intake air temperature correction value $\theta$at. The calculated ignition timing $\theta$adv is stored in a predetermined memory area.

At step S12, a dowel angle (cam angle) is determined by using, for example, a map illustrated in Fig. 13 so as to make the dowel angle increase as the engine speed Ne increases. Accordingly, the step S12 is carried out in consideration with the engine speed Ne. The step S12 proceeds to step S13. At the step S13, the sub-routine illustrated in Fig. 6 is carried out for controlling the output of the engine. After completion of the engine output control routine, then the sub-routine returns to the step S1 of the main routine.

A fuel injection control routine (not shown) for controlling the injectors is carried out with a well known control process with respect to the corrected value KFB calculated by using the main routine. In addition, an ignition control routine (not shown) is carried out, in a manner well known in the art, for supplying a control signal to the ignition circuit 41 in order to make the spark plug 2 operate at the calculated spark timing $\theta$adv. These control routines are carried out by each predetermined crank angle detected by the crank angle sensor 44.

Referring to Fig. 6, description will be made as ragards an engine output control process. At the beginning of this sub-routine, the DBWECU 3 carries out an initialization operation at step Sa1. At step Sa2, current conditions of the engine E and the power transmission system P are detected by using the data signal indicative of, for example, the accelerator opening $\theta$a and the engine speed Ne. The detected data are then storen in a predetermined area. At step Sa3, a required engine torque Teo is calculated by using an intake air flow/torque calculating map as illustrated in Fig. 9 and a throttle valve (accelerator) opening/intake air flow calculating map as illustrated in Fig. 10. In Fig. 9, the absuccissa represents the intake air flow A/N and the ordinate represents an engine torque T while the absuccissa and the ordinate in Fig. 10 represent the throttle valve opening and the intake air flow, respectively. At step Sa4, an engine torque correction amount Te is calculated.

In Fig. 14, illustrated is a dynamic model of the continuously variable transmission 35. The primary pulley 26 having the moment of inertia Ie is supplied with an input with a torque Tt and an angular velocity of wt from a torque converter (t). The torque Tt is transmitted to a steel belt (st) as a torque Te. On the other hand, the secondary pulley 28 having the moment of inertia Iv is supplied with an input with a torque Tv and an angular velocity of wd from the steel belt (st). The torque Tv is transmitted to a driving output (d) as a torque Td. In this way, the torque Te is transmitted through the steel belt (st) to the driving output as the torque Td when the transmission ratio in is changed between both pulleys. The primary and secondary pulleys are operated as expressed by the following equations:

$$Ie \times (d\,wt/dt) = Tt - Te \qquad (3)$$
$$Iv \times (d\,wt/dt) = Tv - Td \qquad (4)$$

Thus, the following equations are obtained:

$$d\,wt/dt = d(in \times wd)/dt$$
$$= (di/dt) \times wd + in \times (d\,w\,d/dt) \qquad (5)$$
$$Te = (1/in) \times Tv \qquad (6)$$

The results of the equations (5) and (6) are substituted into the above equation (3), namely:

$$Ie \times (di/dt) \times wd + in \times Ie \times (d\,wd/dt) = Tt - (1/in) \times Tv \qquad (7)$$

The equation (7) is multiplied by in and add the result thereof to the equation (4). Further, the resultant equation is rearranged in consideration of wt = in × wd, namely:

$$d\,w\,d/dt = (in \times Tt - Td)/(Iv + in^2 \times Ie) - (Ie \times (di/dt) \times wt)/(Iv + in^2 \times Ie) \qquad (8)$$

where the first term of the equation (8) represents an acceleration component depending on the engine output produced on the drive shaft while the second term thereof represents another acceleration component consumed on transmission ratio change of the CVT 35. In this event, an acceleration deviation Δwv (= d w da/dt - d w db/dt) between these accelerations can be obtained in accordance with the following equation where the second term of the equation (8) is not considered assuming that the transmission ratio changing speed (di/dt) is not changed:

$$\Delta wv = (in \times Tta - Td)/(Ie \times in^2 + Iv) - (in \times Ttb - Td)/(Ie \times in^2 + Iv)$$
$$= (in \times (Tta - Ttb)/(Ie \times in^2 + Iv) \qquad (9)$$

Further, (Tta - Ttb) is substituted by the engine torque correction amount ΔTe corresponding to the acceleration deviation to obtain the following equation:

$$\Delta wv = in \times \Delta Te/(Ie \times in^2 + Iv) \qquad (10)$$
$$\Delta Te = (1/in) \times (Ie \times in^2 + Iv) \times \Delta wv \qquad (11)$$

In this way, the engine torque correction amount ΔTe is calculated, at the step Sa4, by using the acceleration deviation Δwv and the actual transmission ratio in. The engine torque correction amount ΔTe is required for accelerating a vehicle. In other words, it is necessary to eliminate the acceleration deviation Δwv.

Turning back to Fig. 14, a new target engine torque Teo1 is calculated by adding the engine torque correction amount Te obtained by the equation (11) to the target engine torque Teo at step Sa5. The step Sa5 is followed by step Sa6. The step Sa6 calculates an available torque Tm for the current engine speed Ne by using the torque calculating map as illustrated in Fig. 11. In addition, the step Sa6 calculates an actual engine torque Tn corresponding to the detected engine speed Ne and the intake air flow A/N by using the intake air flow/torque calculating map as illustrated in Fig. 9. Step Sa7 is subsequently carried out to subtract the actual engine torque Tn from the maximum available torque Tm, namely (Tm - Tn), and the result thereof is compared with the engine torque correction amount ΔTe.

When the step Sa7 is positive, step Sa8 follows. At the step Sa8, a corrected target engine torque Te is determined by adding the engine torque correction value ΔTe to the target engine torque Teol. This step is succeeded by step Sa10. On the other hand, step Sa9 is carried out when the step Sa7 is affirmative. The step Sa9 determines the target engine torque Te to be corrected so as to make the target engine torque Te be equal to the maximum torque Temax, that is, the maximum available torque Tm corresponding to the current engine speed Ne. In addition, the deficient torque ΔTm is calculated by subtracting (Tm - Tn) from the engine torque correction amount ΔTe, namely:

$$\Delta Tm = Te - (Tm - Tn) \qquad (12)$$

The value of the deficient torque ΔTm is stored in a predetermined area. The step Sa9 is followed by the step Sa10. It is noted that the steps Sa7 to Sa9 are carried out for substituting the target engine torque Te into the available torque Tm when the sum of the actual engine torque Tn and the engine output torque correction amount ΔTe is larger than the available torque Tm.

At the step Sa10, the throttle opening θs is determined in accordance with the target engine torque Te and the engine speed Ne by using the maps as illustrated in Figs. 9 and 10. The subsequent step Sa11 calculates an opening deviation Δθ by subtracting an actual opening detected by the throttle opening sensor 12 from the calculated throttle opening θs, namely:

$$\Delta\theta = \theta s - \theta n \qquad (13)$$

Furthermore, the step Sa11 calculates a power Phn with which the opening deviation Δθ can be eliminated. This step is followed by step Sa12 to operate the throttle valve 9 by means of supplying the output Phn to the pulse motor 11. In this way, the corrected target engine torque Te is generated for the internal combusion engine.

Referring now to Fig. 7, description will be made as regards operation carried out by the CVTECU 21. At step Sb1, the CVTECU 21 carries out initialization to determine whether or not each circuit is propery operated. At step Sb2, the CVTECU 21 reads data supplied from each sensor and stores the data in a predetermined memory area. The data represents, for example, the rotation speeds wcf and wcr of the primary pulley 26 and the secondary pulley 28, respectively, and the accelerator opening 0a supplied from the accelerator opening sensor 13 through the DBWECU 3.

At step Sb3, the actual transmission ratio in is obtained by dividing the rotation speed wcf by the rotation speed wcr, that is:

$$in = wcf/wcr \qquad (14)$$

In addition, following step Sb4 calculates the car speed Vn by multiplying the rotation speed wcr of the secondary pulley 28 by the constant $\alpha$, that is:

$$Vn = wcr \times \alpha \qquad (15)$$

The car acceleration dVn/dt is calculated at step Sb5 according to the actual car speed Vn and a previous car speed V(n-1). Subsequent step Sb6 calculates a smoothed acceleration dVf/dt on the basis of the actual car acceleration dVn/dt and previous car accelerations dV(n-1)/dt, dV(n-2)/dt ..., namely:

$$dVf/dt = \beta \times dVf(n-1)/dt + (1 - \beta) \times dVn/dt \quad (16)$$

By the calculated smoothed acceleration dVf/dt, the target acceleration dVo/dt is renewed. At step Sb7, the actual car acceleration dVn/dt is compared with the smoothed acceleration dVf/dt to calculate the acceleration deviation $\Delta wv$ according to the following equation:

$$\Delta wv = (dVf/dt - dVn/dt)/2\pi r \qquad (17)$$

where r represents a radias of wheel. The obtained $\Delta wv$ is corrected into the deviation of the rotation acceleration of the wheels and stored in a predetermined area. At step Sb8, an engine speed Nei corresponding to the target transmission ratio is calculated by using the map (Fig. 8) for calculating an engine speed corresponding to the target transmission ratio. Following step Sb9 is carried out for calculating the transmission ratio deviation $\Delta i$ between the target transmission ratio io and the actual transmission ratio in. Step Sb10 calculates the transmission ratio changing speed Vm for the transmission ratio deviation $\Delta i$ by using the transmission ratio changing speed calculating map as illustrated in Fig. 12. In this event, the maximum value Vmax and the minimum value Vmin of the transmission ratio changing speed Vm are predetermined by the map. The calculated transmission ratio changing speed Vm is used as a temporal transmission ratio changing speed.

At step Sb11, a deficient transmission ratio changing speed Vmt corresponding to the actual transmission ratio in is calculated by using the following equation

$$d\,wd/dt = (in \times Tt - Td)/(le \times in^2 + Iv) - ((di/dt) \times le \times we)/(le \times in^2 + Iv) \qquad (18)$$

The equation (18) is derived from the equation (8) by substituting wt into we (which corresponds to the engine speed). The second term of the equation (18) is an acceleration component to be consumed the transmission ratio change of the CVT 35. In other words the hydraulic pressure p for the primary pulley 26 corresponds to the transmission ratio changing speed (di/dt) as will later be described more datail. It is assumed that the torque consumed for changing the transmission ratio at the transmission ratio changing speed (di/dt) is $\Delta Tei$, which is also referred to as the deficeint torque $\Delta Tm$ at step Sb12 described below. In this event, the following equation can be obtained:

$$(in \times \Delta Tei)/(le \times in^2 + Iv) - ((di/dt) \times le \times we)/(le \times in^2 + Iv) = 0 \qquad (19)$$

according to the equation (19), the following equations can be obtained.

$$in \times \Delta Tei = (di/dt) \times le \times we \qquad (20)$$
$$di/dt = Vmt = in \times (1/(le \times we)) \times \Delta Tei \qquad (21)$$

By using these equations, the corrected transmission ratio changing speed Vm1 is decided as the following equation:

$$Vm1 = Vm - Vmt \qquad (22)$$

At the step Sb12, the primary pressure Pp and the line pressure Pr is determined for the decided transmission ratio changing speed Vm1 (di/dt) by using the predetermined primary pressure calculating map. It is noted that the control device according to the describing embodiment of this invention is designed so as to apply a constant line pressure Pr for the secondary pulley 28. As well known in the art, the transmission ratio changing speed (di/dt) is controlled by changing the hydraulic pressure P applied to the pulleys 26 and 28 in the continuous variable transmission 35. Accordingly, the following equation is obtained.

$$di/dt = f(p), \quad imin \leq i \leq imax \qquad (23)$$

Referring temporary to Figs. 15 and 16 in addition to Fig, 7 for further understanding of the operation carried out at the step Sb12. Fig. 15 shows a schematic diagram of a part of the pulley in the continuous variable transmission 35. In Fig. 15, r1 represents an effective diameter of the pulley and represents a moving distance of the pulley. The moving distance $\Delta\chi$ is calculated by the following equation:

$$\Delta x = (1/S) \times \int Qdt \qquad (24)$$

where Q represents a fuel injection amount and (1/S) represents a proportional constant. In this event, the effective diameter r1 is considered as being directly proportional to the gap $\Delta\chi$. Additionaly, the transmission ratio changing speed Vm1 corresponding to the change of the transmission ratio ratio i is considered as being directly proportional to the change of the effective diameter r1 of the pulley (drl/dt). Accordingly, the following equation can be derived:

$$\begin{aligned} d(\Delta x)/dt &= (1/S) \times Q \\ &= (1/S) \, x\sqrt{k \times \Delta P} \end{aligned} \qquad (25)$$

By using this equation (25), the transmission ratio changing speed calculating map as illustrated in Fig. 16 can be obtained. As shown in Fig. 16, the primary pressure Pp is determined in accordance with the transmission ratio changing speed Vm1 (di/dt) where p (primary pressure Pp) is equal to pressure differences in two hydraulic chamber (which is proportional to the fuel flow). At step Sb13, duty ratios Dup and Dur are determined so as to keep the primary and line pressures Pp and Pr. The first and the second solenoid values 33 and 34 are controlled with respect to the determined duty ratios Dup and Dur, respectively, thereby the real transmission ratio in of continuous variable transmission 35 approaches to the desired target transmission ratio io.

## Claims

1. A control device for an internal combustion engine (E) and a continuously variable transmission (35) of a vehicle, said continuously variable transmission (35) being disposed between said internal combustion engine (E) and driving wheels (32) and having a continuously changeable transmission ratio, said control device comprising: intake air flow adjusting means (9) disposed in an inlet of said internal combustion engine (E), said intake air flow adjusting means (9) being controllable independently of the operation of a driver-operable member (10); operational amount detecting means (13) for detecting an operational amount of said driver-operable member (10) to produce an operational amount signal; target transmission ratio determining means (50) for determining a target transmission ratio for said continuously variable transmission (35) in response to said operational amount signal to produce a target transmission ratio signal; target driving condition amount determining means (90) for determining a target vehicle driving condition amount to produce a target driving condition amount signal; driving condition amount detecting means (80) for detecting an actual driving condition amount of the vehicle to produce a driving condition amount signal; and driving condition amount deviation calculating means (100) for calculating a driving condition amount deviation between said target vehicle driving condition amount determined by said target driving condition amount determining means (90) and said actual vehicle driving condition amount detected by said driving condition amount detecting means (80) to produce a driving condition amount deviation signal;

whereby the transmission ratio of said continuously variable transmission (35) and said intake air flow adjusting means (9) are alternately controlled on the basis of the target transmission ratio determined by said target transmission ratio determining means (50) and on the basis of the driving condition amount deviation calculated by said driving condition amount deviation calculating means (100), said control device is characterized by further comprising:

transmission ratio detecting means (48) for detecting an actual transmission ratio of said continuously variable transmission (35) to produce an actual transmission ratio signal;

transmission ratio deviation calculating means (60) for calculating a deviation between the target transmission ratio determined by said target transmission ratio determining means (50) and said actual transmission ratio detected by said transmission ratio detecting means (48) to produce a transmission ratio deviation signal;

transmission ratio changing speed determining means (70) for determining a target value of a transmission ratio changing speed in response to said transmission ratio deviation signal to produce a transmission ratio changing speed signal;

engine output torque correction amount determining means (110) for determining an engine output torque correction amount which is required to eliminate the driving condition amount deviation calculated by said driving condition amount deviation calculating means (100);

engine output torque controlling means (120) for controlling said intake air flow adjusting means (9) on the basis of said engine output torque correction amount signal when an engine output torque can be changed by said engine output torque correction amount, and on the basis of a restricted engine output torque correction amount when the engine torque cannot be changed by said engine output torque correction amount, wherein said restricted engine output torque correction amount is obtained by restricting said engine output torque correction amount within a range where engine output torque can be changed;

transmission ratio changing speed correcting means (130) for correcting said target value of the transmission ratio changing speed determined by said changing speed determining means (70), when said engine output torque correction amount is restricted by said engine output torque controlling means (120), on the basis of a deficient torque to produce a signal indicative of the corrected target value of the transmission ratio changing speed, wherein said deficient torque is lacked by restricting said engine output torque correction amount; and

transmission controlling means (140) for controlling said continuously variable transmission (35) in response to said corrected target value of the transmission ratio changing speed signal so that an actual transmission ratio converges to said target transmission ratio determined by said target transmission ratio determining means (50) at a transmission ratio changing speed which is subtantially equal to the target value of the transmission ratio changing speed corrected by said changing speed correcting means (130).

2. The control device as in claim 1, further including required torque determining means (150) for determining a required torque signal representing a torque of said internal combustion engine (E) required by a driver of said vehicle in response to said operational amount signal detected by said operational amount detecting means (13).

3. The control device as in claim 2, where said engine torque controlling means (120) comprises:

target engine torque determining means (121) for determining a target engine torque for said internal combustion engine (E) in response to said required torque signal supplied from said required torque determining means (150) and the engine output torque correction amount determined by said engine output torque correction amount determining means (110) to produce a target engine torque signal;

restricting means (122) for restricting said target engine torque signal supplied from said target engine torque determining means (121) within a range of an allowable engine torque; and

intake air amount controlling means (123) for controlling said intake air flow adjusting means (9) in response to the target engine torque signal restricted by said restricting means (122) within the allowable range of the engine torque.

4. The control device as in claim 3, wherein said required torque determining means (150) is for use in determining said required torque in response to said operational amount signal supplied from said operational amount detecting means (13) and in response to a driving condition signal representative of a driving condition of said internal combustion engine (E), and said restricting means (122) uses a maximum torque of said internal combustion engine (E) as a maximum value of said range of the allowable engine torque, and uses said driving condition, which is used for said required torque determining means (150) to determine said required torque, as a parameter to determine said maximum torque of said internal combustion engine (E).

5. The control device as in claim 4, wherein said changing speed correcting means (130) corrects said target value of the transmission ratio changing speed in accordance with a deviation between said target engine torque determined by said target engine torque determining means (121) and said maximum torque of said internal combustion engine (E), which is for use in restricting said target engine torque in said restricting means (122).

6. The control device as in claim 1, wherein said driving condition amount detecting means (80) repeatedly detects actual accelerations of the vehicle and outputs them as driving condition amount signals and calculates a smoothed acceleration which is obtained by smoothing previous accelerations of said vehicle in response to said actual acceleration signals of said vehicle.

7. The control device as in claim 6, wherein said target driving condition amount determining means (90) determines a target driving condition amount in accordance with said smoothed acceleration detected by said driving condition amount detecting means (80).

8. The control device as in claim 1, wherein said driver-operable member (10) is an accelerator pedal.

9. The control device as in claim 1, wherein said intake air flow adjusting means (9) is a throttle valve disposed in the inlet of said internal combustion engine (E).

**Patentansprüche**

1. Regelungseinrichtung für eine Verbrennungskraftmaschine (E) und ein stufenloses Getriebe (35) eines Fahrzeugs, wobei das stufenlose Getriebe (35) zwischen der Verbrennungskraftmaschine (E) und Antriebsrädern (32) angeordnet ist und ein stufenlos veränderbares Übersetzungsverhältnis hat, wobei die Regelungseinrichtung umfaßt: eine Ansaugluftstromeinstelleinrichtung (9), die in einem Einlaß der Verbrennungskraftmaschine (E) angeordnet ist, wobei die Ansaugluftstromeinstelleinrichtung (9) unabhängig von dem Betrieb eines vom Fahrer betätigbaren Teils (10) regelbar ist; eine Betätigungsmaßerfassungseinrichtung (13) zum Erfassen eines Betätigungsmaßes des vom Fahrer betätigbaren Teils (10), um ein Betätigungsmaßsignal zu erzeugen; eine Sollübersetzungsverhältnisbestimmungseinrichtung (50) zum Bestimmen eines Sollübersetzungsverhältnisses für das stufenlose Getriebe (35) in Reaktion auf das Betätigungsmaßsignal, um ein Sollübersetzungsverhältnissignal zu erzeugen; eine Bestimmungseinrichtung für das Sollantriebsbedingungsmaß (90), um ein Sollfahrzeugantriebsbedingungsmaß zu bestimmen, um ein Sollantriebsbedingungsmaßsignal zu erzeugen; eine Antriebsbedingungsmaßerfassungseinrichtung (80) zum Erfassen eines tatsächlichen Antriebbedingungsmaßes des Fahrzeugs, um ein Antriebsbedingungsmaßsignal zu erzeugen; und eine Berechnungseinrichtung (100) für die Antriebsbedingungsmaßabweichung zum Berechnen einer Antriebsbedingungsmaßabweichung zwischen dem Sollfahrzeugantriebsbedingungsmaß, das von der Bestimmungseinrichtung für das Sollantriebsbedingungsmaß (90) bestimmt wird, und dem tatsächlichen Fahrzeugantriebsbedingungsmaß, das von der Antriebsbedingungsmaßerfassungseinrichtung (80) erfaßt wird, um ein Antriebsbedingungsmaßabweichungssignal zu erzeugen;

wobei das Übersetzungsverhältnis des stufenlosen Getriebes (35) und die Ansaugluftstromeinstelleinrichtung (9) alternierend auf der Basis des Sollübersetzungsverhältnisses geregelt werden, das von der Sollübersetzungsverhältnisbestimmungseinrichtung (50) bestimmt wird, und auf der Basis der Antriebsbedingungsmaßabweichung, die von der Berechnungseinrichtung (100) für die Antriebsbedingungsmaßabweichung berechnet wird,

wobei die Regelungseinrichtung dadurch gekennzeichnet ist, daß sie ferner umfaßt:

eine Übersetzungsverhältniserfassungseinrichtung (48) zum Erfassen eines tatsächlichen Übersetzungsverhältnisses des stufenlosen Getriebes (35), um ein tatsächliches Übersetzungsverhältnissignal zu erzeugen;

eine Übersetzungsverhältnisabweichungsberechnungseinrichtung (60) zum Berechnen einer Abweichung zwischen dem Sollübersetzungsverhältnis, das von der Sollübersetzungsverhältnisbestimmungseinrichtung (50) bestimmt wird, und dem tatsächlichen Übersetzungsverhältnis, das von der Übersetzungsverhältniserfassungseinrichtung (48) erfaßt wird, um ein Übersetzungsverhältnisabweichungssignal zu erzeugen;

eine Bestimmungseinrichtung (70) für die Übersetzungsverhältnisänderungsgeschwindigkeit zum Bestimmen eines Sollwertes einer Übersetzungsverhältnisänderungsgeschwindigkeit in Reaktion auf das Übersetzungsverhältnisabweichungssignal, um ein Übersetzungsverhältnisänderungsgeschwindigkeitssignal zu erzeugen;

eine Bestimmungseinrichtung (110) für ein Motorausgabedrehmomentberichtigungsmaß zum Bestimmen eines Motorausgabedrehmomentberichtigungsmaßes, das erforderlich ist, um die Antriebsbedingungsmaßabweichung zu beseitigen, die von der Berechnungseinrichtung (100) für die Antriebsbedingungsmaßabweichung berechnet wird;

eine Motorausgabedrehmomentregelungseinrichtung (120) zum Regeln der Ansaugluftstromeinstelleinrichtung (9) auf der Basis des Motorausgabedrehmomentberichtigungsmaßsignals, wenn ein Motorausgabedrehmoment durch das Motorausgabedrehmomentberichtigungsmaß geändert werden kann, und auf der Basis eines beschränkten Motorausgabedrehmomentberichtigungsmaßes, wenn das Motordrehmoment nicht durch das Motorausgabedrehmomentberichtigungsmaß geändert werden kann, wobei das beschränkte Motorausgabedrehmomentberichtigungsmaß durch Beschränken des Motorausgabedrehmomentberichtigungsmaßes innerhalb eines Bereiches erhalten wird, wo das Motorausgabedrehmoment geändert werden kann;

eine Berichtigungseinrichtung (130) für die Übersetzungsverhältnisänderungsgeschwindigkeit zum Berichtigen des Sollwertes des Übersetzungsverhältnisänderungsgeschwindigkeit, die von der Änderungsgeschwindigkeitsbestimmungseinrichtung (70) bestimmt wird, wenn das Motorausgabedrehmomentberichtigungsmaß von der Motorausgabedrehmomentregelungseinrichtung (120) beschränkt wird, auf der Basis eines mangelhaften Drehmoments, um ein Signal zu erzeugen, das den berichtigten Sollwert der Übersetzungsverhältnisänderungsgeschwindigkeit angibt, wobei das mangelhafte Drehmoment aufgrund der Beschränkung des Motorausgabedrehmomentberichtigungsmaßes fehlt; und

eine Übertragungsregelungseinrichtung (140) zum Regeln des stufenlosen Getriebes (35) in Reaktion auf den berichtigten Sollwert des Übersetzungsverhältnisänderungsgeschwindigkeitssignals derart, daß ein tatsächliches Übersetzungsverhältnis zum Sollübersetzungsverhältnis konvergiert, das von der Sollübersetzungsverhältnisbestimmungseinrichtung (50) bei einer Übersetzungsverhältnisänderungsgeschwindigkeit bestimmt wird, die im wesentlichen gleich zum Sollwert der Übersetzungsverhältnisänderungsgeschwindigkeit ist, die von der Änderungsgeschwindigkeitsberichtigungseinrichtung (130) berichtigt wird.

2. Regelungseinrichtung nach Anspruch 1, welche ferner eine Bestimmungseinrichtung (150) für ein erforderliches Drehmoment zum Bestimmen eines erforderlichen Drehmomentsignals aufweist, das ein Drehmoment der verbrennungskraftmaschine (E) repräsentiert, das von einem Fahrer des Fahrzeugs in Reaktion auf das Betätigungsmaßsignal angefordert wird, das von der Betätigungsmaßerfassungseinrichtung (13) erfaßt wird.

3. Regelungseinrichtung nach Anspruch 2, wobei die Motordrehmomentregelungseinrichtung (120) umfaßt:

eine Sollmotordrehmomentbestimmungseinrichtung (121) zum Bestimmen eines Sollmotordrehmoments für die Verbrennungskraftmaschine (E) in Reaktion auf das Signal für das erforderliche Drehmoment, das von der Bestimmungseinrichtung für das erforderliche Drehmoment (150) zugeführt wird, und das Motorausgabedrehmomentberichtigungsmaß, das von der Bestimmungseinrichtung für das Motorausgabedrehmomentberichtigungsmaß (110) bestimmt wird, um ein Sollmotordrehmomentsignal zu erzeugen;

eine Beschränkungseinrichtung (122) zum Beschränken des Sollmotordrehmomentsignals, das von der Sollmotordrehmomentbestimmungseinrichtung (121) zugeführt wird, innerhalb eines Bereichs eines erlaubten Motordrehmoments; und

eine Ansaugluftmengenregelungseinrichtung (123) zum Regeln der Ansaugluftstromeinstelleinrichtung (9) in Reaktion auf das Sollmotordrehmomentsignal, das von der Beschränkungseinrichtung (122) innerhalb des erlaubten Bereichs des Motordrehmoments beschränkt wird.

4. Regelungseinrichtung nach Anspruch 3, wobei die Bestimmungseinrichtung für das erforderliche Drehmoment (150) zum Bestimmen des erforderlichen Drehmoments in Reaktion auf das Betätigungsmaßsignal verwendet wird, das von der Betätigungsmaßerfassungseinrichtung (13) zugeführt wird, und in Reaktion auf ein Antriebsbedingungssignal, das für eine Antriebsbedingung der Verbrennungskraftmaschine (E) repräsentativ ist, und wobei die Beschränkungseinrichtung (122) ein maximales Drehmoment der Verbrennungskraftmaschine (E) als maximalen Wert des Bereiches des erlaubten Motordrehmoments verwendet, und die Antriebsbedingung, die von der Bestimmungseinrichtung für das erforderliche Drehmoment (150) zum Bestimmen des erforderlichen Drehmoments verwendet wird, als einen Parameter verwendet, um das maximale Drehmoment der Verbrennungskraftmaschine (E) zu bestimmen.

5. Regelungseinrichtung nach Anspruch 4, wobei die Änderungsgeschwindigkeitsberichtigungseinrichtung (130) den Sollwert der Übersetzungsverhältnisänderungsgeschwindigkeit gemäß einer Abweichung zwischen dem Sollmotordrehmoment, das von der Sollmotordrehmomentbestimmungseinrichtung (121) bestimmt wird, und dem maximalen Drehmoment der Verbrennungskraftmaschine (E) berichtigt, das zum Beschränken des Sollmotordrehmoments in der Beschränkungseinrichtung (122) verwendet wird.

**6.** Regelungseinrichtung nach Anspruch 1, wobei die Antriebsbedingungsmaßerfassungseinrichtung (80) wiederholt die tatsächlichen Beschleunigungen des Fahrzeugs erfaßt und diese als Antriebsbedingungsmaßsignale ausgibt und eine geglättete Beschleunigung berechnet, die von den geglätteten früheren Beschleunigungen des Fahrzeugs in Reaktion auf die tatsächlichen Beschleunigungssignale des Fahrzeugs erhalten wird.

**7.** Regelungseinrichtung nach Anspruch 6, wobei die Sollantriebsbedingungsmaßbestimmungseinrichtung (90) ein Sollantriebsbedingungsmaß gemäß der geglätteten Beschleunigung bestimmt, die von der Antriebsbedingungsmaßerfassungseinrichtung (80) erfaßt wird.

**8.** Regelungseinrichtung nach Anspruch 1, wobei das vom Fahrer betätigbare Teil (10) ein Gaspedal ist.

**9.** Regelungseinrichtung nach Anspruch 1, wobei die Ansaugluftstromeinstelleinrichtung (9) ein Drossel-ventil ist, das im Einlaß der Verbrennungskraftmaschine (E) angeordnet ist.

**Revendications**

**1.** Appareil de commande pour un moteur à combustion interne (E) et pour une transmission à variation continue (35) dans un véhicule, ladite transmission à variation continue (35) étant disposée entre ledit moteur à combustion interne (E) et des roues motrices (32) et présentant un rapport de transmission susceptible d'être modifié en continu, ledit appareil de commande comprenant : des moyens de réglage du débit d'air admis (9), disposés dans une admission dudit moteur à combustion interne (E), lesdits moyens de réglage du débit d'air admis (9) pouvant être commandés indépendamment du fonctionnement d'un organe (10) susceptible d'être actionné par un conducteur; des moyens de détection d'une grandeur fonctionnelle (13) afin de détecter une grandeur fonctionnelle dudit organe (10) susceptible d'être actionné par un conducteur afin de produire un signal de grandeur fonctionnelle; des moyens de détermination d'un rapport de transmission cible (50) pour déterminer un rapport de transmission cible pour ladite transmission à variation continue (35) en réponse audit signal de grandeur fonctionnelle afin de produire un signal de rapport de transmission cible; des moyens de détermination d'une grandeur relative à la condition d'entraînement cible (90) afin de déterminer une grandeur relative à la condition d'entraînement cible pour le véhicule afin de produire un signal de grandeur pour la condition d'entraînement cible ; des moyens de détection d'une grandeur relative à la condition d'entraînement (80) afin de détecter une grandeur relative à la condition d'entraînement réelle du véhicule pour produire un signal de grandeur relatif à la condition d'entraînement; et des moyens de calcul d'une déviation (100) pour calculer une déviation de la grandeur relative à la condition d'entraînement entre ladite grandeur relative à la condition d'entraînement cible pour le véhicule, déterminée par lesdits moyens de détermination d'une grandeur (90) relative à la condition d'entraînement cible, et ladite grandeur relative à la condition d'entraînement réelle du véhicule détectée par lesdits moyens de détection (80) d'une grandeur relative à la condition d'entraînement cible, afin de produire un signal de déviation pour la grandeur relative à la condition d'entraînement;

grâce à quoi le rapport de transmission de ladite transmission à variation continue (35) et lesdits moyens de réglage du débit d'air admis (9) sont commandés en alternance en se basant sur le rapport de transmission cible déterminé par lesdits moyens de détermination du rapport de transmission cible (50), et en se basant sur la déviation de la grandeur relative à la condition d'entraînement calculée par lesdits moyens de calcul de déviation de la grandeur relative à la condition d'entraînement (100),

ledit appareil de commande étant caractérisé en ce qu'il comprend en outre :
- des moyens de détection d'un rapport de transmission (48) afin de détecter un rapport de transmission réel de ladite transmission à variation continue (35) pour produire un signal de rapport de transmission réel;
- des moyens de calcul de déviation du rapport de transmission (60) pour calculer une déviation entre le rapport de transmission cible déterminé par lesdits moyens de détermination du rapport de transmission cible (50) et ledit rapport de transmission réel détecté par lesdits moyens de détection du rapport de transmission (48) afin de produire un signal de déviation pour le rapport de transmission ;
- des moyens de détermination d'une vitesse de variation du rapport de transmission (70) pour déterminer une valeur cible d'une vitesse de variation du rapport de transmission en réponse audit signal de déviation dudit rapport de transmission afin de produire un signal de vitesse de variation du rapport de transmission;

- des moyens de détermination d'une grandeur de correction relative au couple de sortie du moteur (110) afin de déterminer une grandeur de correction pour le couple de sortie du moteur qui est nécessaire pour éliminer la déviation de la grandeur relative à la condition d'entraînement calculée par lesdits moyens de calcul de la déviation de la grandeur relative à la condition d'entraînement (100);

- des moyens de commande du couple de sortie du moteur (120) afin de commander lesdits moyens de réglage du débit d'air admis (9) en se basant sur ledit signal de la grandeur relatif à la correction du couple de sortie du moteur lorsqu'un couple de sortie du moteur peut être modifié de ladite quantité de correction du couple de sortie du moteur, et en se basant sur une grandeur de correction restreinte pour le couple de sortie du moteur lorsque le couple moteur ne peut pas être changé de ladite grandeur de correction du couple de sortie, ladite grandeur de correction restreinte pour le couple de sortie du moteur étant obtenue en restreignant ladite grandeur de correction dudit couple de sortie du moteur dans une plage dans laquelle on peut modifier le couple de sortie du moteur;

- des moyens de correction de la vitesse de variation du rapport de transmission (130) pour corriger ladite valeur cible de la vitesse de variation du rapport de transmission déterminée par lesdits moyens de détermination de vitesse de variation (70), lorsque ladite grandeur de correction du couple de sortie du moteur est restreinte par lesdits moyens de commande du couple de sortie du moteur (120), en se basant sur un couple déficient pour produire un signal indicatif de la valeur cible corrigée de la vitesse de variation du rapport de transmission, ledit couple déficient faisant défaut en restreignant ladite grandeur de correction du couple de sortie du moteur; et

- des moyens de commande de transmission (140) pour commander ladite transmission à variation continue (35) en réponse à ladite valeur cible corrigée du signal de vitesse de variation du rapport de transmission, de telle sorte qu'un rapport de transmission réel converge vers ledit rapport de transmission cible déterminé par lesdits moyens de détermination du rapport de transmission cible (50) à une vitesse de variation du rapport de transmission qui est sensiblement égale à la valeur cible de la vitesse de variation du rapport de transmission corrigée par lesdits moyens de correction de la vitesse de variation (130).

2. Appareil de commande selon la revendication 1, comprenant en outre des moyens de détermination d'un couple requis (150) pour déterminer un signal de couple requis qui représente un couple dudit moteur à combustion interne (E) requis par un conducteur dudit véhicule, en réponse audit signal de grandeur fonctionnelle détecté par lesdits moyens de détection de grandeur fonctionnelle (13).

3. Appareil de commande selon la revendication 2, dans lequel lesdits moyens de commande du couple moteur (120) comprennent :

   - des moyens de détermination d'un couple moteur cible (121) pour déterminer un couple moteur cible pour ledit moteur à combustion interne (E) en réponse audit signal de couple requis fourni depuis lesdits moyens de détermination du couple requis (150) et en réponse à ladite grandeur de correction du couple de sortie moteur déterminée par lesdits moyens de détermination de la grandeur de correction du couple de sortie moteur (110) pour produire un signal de couple moteur cible;

   - des moyens de restriction (122) pour restreindre ledit signal de couple moteur cible fourni depuis lesdits moyens de détermination du couple moteur cible (121) à l'intérieur d'une plage correspondant à un couple moteur permissible ; et

   - des moyens de commande pour la quantité d'air admis (123) afin de commander lesdits moyens de réglage du débit d'air admis (9) en réponse audit signal de couple moteur cible restreint par lesdits moyens de restriction (122) à l'intérieur de la plage permissible pour le couple moteur.

4. Appareil de commande selon la revendication 3, dans lequel lesdits moyens de détermination du couple requis (150) sont destinés à être utilisés pour déterminer ledit couple requis en réponse audit signal de grandeur fonctionnelle fourni depuis lesdits moyens de détection de grandeur fonctionnelle (13), et en réponse à un signal de condition d'entraînement représentatif d'une condition d'entraînement dudit moteur à combustion interne (E), et lesdits moyens de restriction (122) utilisant un couple maximum dudit moteur à combustion interne (E) en tant que valeur maximum pour ladite plage du couple moteur permissible, et utilisant ladite condition d'entraînement, qui est utilisée pour lesdits moyens de détermination du couple requis (150) pour déterminer ledit couple requis, en tant que paramètre pour déterminer ledit couple maximum dudit moteur à combustion interne (E).

5. Appareil de commande selon la revendication 4, dans lequel lesdits moyens de correction de la vitesse de variation (130) corrigent ladite valeur cible de la vitesse de variation du rapport de transmission conformément à une déviation entre ledit couple moteur cible déterminé par lesdits moyens de détermination du couple moteur cible (121), et ledit couple maximum dudit moteur à combustion interne (E) qui est destiné à être utilisé pour restreindre ledit couple moteur cible dans lesdits moyens de restriction (122).

6. Appareil de commande selon la revendication 1, dans lequel lesdits moyens de détection de la grandeur relative à la condition d'entraînement (80) détectent de façon répétée des accélérations réelles du véhicule et les fournissent en sortie en tant que signaux de grandeur relative à la condition d'entraînement, et calculent une accélération lissée qui est obtenue par lissage d'accélérations antérieures du véhicule en réponse auxdits signaux d'accélération réels dudit véhicule.

7. Appareil de commande selon la revendication 6, dans lequel lesdits moyens de détermination de la grandeur relative à la condition d'entraînement cible (90) déterminent une grandeur relative à la condition d'entraînement cible conformément à ladite accélération lissée détectée par lesdits moyens de détection de la grandeur relative à la condition d'entraînement (80).

8. Appareil de commande selon la revendication 1, dans lequel ledit organe susceptible d'être actionné par le conducteur (10) est une pédale d'accélérateur.

9. Appareil de commande selon la revendication 1, dans lequel lesdits moyens de réglage du débit d'air admis (9) sont constitués par une valve papillon disposée sur l'admission dudit moteur à combustion interne (E).

FIG. 1

EP 0 510 590 B1

# F I G. 2

PRIMARY PRESSURE

LINE PRESSURE

FIG. 3

# FIG. 4

EP 0 510 590 B1

FIG. 5

```
                    START

                 DETECT CURRENT CONDITION      S1

          Y           FUEL CUT?                S2

  S3                      N
   FBF = 0             FCF = 0                  S5

  S4
   FCF = 1      N    AIR-FUEL RATIO             S6
                     SATISFIED?
                          Y
  S9
   DECIDE A/F        CALCULATE KFB              S7
   CORRECTED CO-
   EFFICIENT MAP     KAF ← KFB                  S8


                 CALCULATE KDT, TD              S10
                 θwt, θap, θat

                 CALCULATE SPARK                S11
                 TIMING θadv

                 DETERMINE CAM                  S12
                 ANGLE

                 ENGINE OUTPUT CONTROL          S13
```

FIG.6

```
              ┌────────────────────────────┐
              │ ENGINE  OUTPUT  CONTROL     │
              └────────────┬───────────────┘
                           │
              ┌────────────────────────┐
              │    INITIALIZATION      │── Sa1
              └────────────┬───────────┘
                           │
          ┌────────────────────────────┐
          │        READ DATA           │── Sa2
          └───────────────┬────────────┘
                          │
    ┌──────────────────────────────────────────┐
    │  A/N←f1(θa, Ne), Teo←A/N                   │── Sa3
    └──────────────────┬───────────────────────┘
                       │
    ┌──────────────────────────────────────────┐
    │  ΔTe=(Ie×in²+Iv)×Δωv/in                    │── Sa4
    └──────────────────┬───────────────────────┘
                       │
       ┌──────────────────────────────────┐
       │      Teo1=Teo+ΔTe                 │── Sa5
       └────────────────┬─────────────────┘
                        │
    ┌──────────────────────────────────────────┐
    │          CALCULATE Tm                     │── Sa6
    └──────────────────┬───────────────────────┘
                       │
          Y  ╱◇◇◇◇◇◇◇◇◇◇◇◇◇◇◇◇◇◇◇◇◇◇◇◇╲  Sa7
        ◄───┤     ΔTe<(Tm−Tn)            ├─── N ──┐
            ╲◇◇◇◇◇◇◇◇◇◇◇◇◇◇◇◇◇◇◇◇◇◇◇◇◇╱         │
        │                                          │
  Sa8   │                                    Sa9   │
   ┌─────────────────────┐              ┌────────────────┐
   │   Te←Teo1+ΔTe        │              │   Te←Tm        │
   └──────────┬──────────┘              │   CALCULATE    │
              │                         │   ΔTm          │
              │                         └───────┬────────┘
              └────────────┬───────────────────┘
                           │
          ┌──────────────────────────────┐
          │      θs ← Te, Ne              │── Sa10
          └───────────────┬──────────────┘
                          │
       ┌──────────────────────────────────┐
       │   Δθ=θs−θn, Phn←Δθ                │── Sa11
       └────────────────┬─────────────────┘
                        │
      ┌────────────────────────────────────┐
      │  OPERATE THROTTLE VALVE             │── Sa12
      │  WITH Phn                           │
      └────────────────┬───────────────────┘
                       │
                 ┌───────────┐
                 │  RETURN   │
                 └───────────┘
```

# F I G.  7

CVT CONTROL

INITIALIZATION — Sb1

READ DATA — Sb2

$i n = W c f / W c r$ — Sb3

$V n = \alpha \times W c r$ — Sb4

$d V n / d t \leftarrow | V n - V(n-1) |$ — Sb5

$d V o / d t \leftarrow d V f / d t$,  $d V f / d t = \beta \times d V f (n-1) / d t + (1 - \beta) \times d V n / d t$ — Sb6

$\Delta \omega v = (d V f / d t - d V n / d t) / 2 \pi r$ — Sb7

$N e i \leftarrow f 1 (\Theta s)$,  $i o \leftarrow N e i$ — Sb8

$\Delta i \leftarrow i o - i n$ — Sb9

$V m \leftarrow \Delta i$ — Sb10

$V m 1 = V m - V m t$ — Sb11

$P p$,  $P r \leftarrow V m 1$ — Sb12

PRODUCE $Ddp$, $Ddr$ — Sb13

RETURN

FIG. 8

# FIG. 9

# FIG. 10

FIG. 11

FIG. 12

28

## F I G. 13

(LARGE)

DOWEL ANGLE

(SMALL)

ENGINE SPEED → Ne

## F I G. 14

$$\omega t = in \times \omega d$$

$$Te = \frac{1}{in} \times Tv$$

(St)

# FIG. 15

# FIG. 16